# EUROPEAN PATENT APPLICATION

(11) **EP 4 822 225 A1**
(43) Date of publication of application: **14.10.2026**
(21) Application number: 24898961.8
(22) Date of filing: 24.07.2024
(51) Int. Cl.: F16K 11/16, F16K 27/00, F16K 27/06

(54) **FLOW PATH SWITCHING VALVE**

(30) Priority: 08.12.2023 JP 2023208015
(71) Applicant: Fujikoki Corporation, Tokyo 158-0082 (JP)
(72) Inventor: KONDO, Daisuke, Tokyo 158-0082 (JP); HARA, Seiichi, Tokyo 158-0082 (JP); MORITA, Kento, Tokyo 158-0082 (JP)
(74) Representative: Ter Meer und Partner mbB
(86) International application number: PCT/JP2024/026529
(87) International publication number: WO 2025/120900

(57) **Abstract**

A flow path switching valve 10 includes: a valve unit 20 including a valve main body 14 in which a first inlet/outlet 31 and a second inlet/outlet 32 being formed on a wall surface of a valve chamber 12 and a third inlet/outlet 33 being formed on a bottom surface of the valve chamber 12, a valve body 16 that is rotatably disposed in the valve chamber 12, a first flow path 21, a second flow path 22, and a third flow path 23; and a rotary drive unit 18 that is connected to the valve unit 20 and rotates the valve body 16. Another valve unit 20 is connected to one valve unit 20 in an overlapping manner, two valve bodies 16 in the two valve units 20 are configured to be rotated by one rotary drive unit 18, and a delay angle θ, which causes a rotation start of the valve body 16 located at a side far from the rotary drive unit 18 to be delayed from a rotation start of the valve body 16 located at a side close to the rotary drive unit 18, is set.

## Description

### Technical Field

The present disclosure relates to a flow path switching valve.

### Background Art

Japanese Patent Application Laid-Open (JP-A) No. 2023-82136 discloses a valve device in which a plurality of integrally formed valve bodies is attached to a shaft, and the shaft is rotationally driven to rotate the plurality of valve bodies in synchronization.

### SUMMARY OF INVENTION

### Technical Problem

However, since a total torque for rotating the plurality of valve bodies in synchronization is a sum of torques for moving the respective valve bodies, it is considered that when the number of valve bodies increases, more output is required for an actuator for rotating the valve bodies, and the actuator increases in size.

An object of the disclosure is to reduce a total torque when a plurality of valve bodies are rotationally driven by one rotary drive unit, and to suppress an increase in size of a flow path switching valve.

### Solution to Problem

According to a first aspect, a flow path switching valve includes: a valve unit, the valve unit including a valve main body in which a valve chamber is formed, a first inlet/outlet and a second inlet/outlet through which a fluid enters and exits being formed on a wall surface forming the valve chamber, and a third inlet/outlet being formed on a bottom surface of the valve chamber; a valve body that is rotatably disposed in the valve chamber and that is provided with a flow path; a first flow path that communicates with the first inlet/outlet; a second flow path that is arranged in parallel with the first flow path with the valve main body interposed therebetween and communicates with the second inlet/outlet; and a third flow path that communicates with the third inlet/outlet and has an opening on a side opposite to the third inlet/outlet; and a rotary drive unit that is connected to the valve unit and that rotates the valve body such that communication states of the first inlet/outlet, the second inlet/outlet, and the third inlet/outlet are selectively switched via the flow path of the valve body, in which another valve unit is connected to the one valve unit in an overlapping manner, and the two valve bodies in the two valve units are configured to be rotated by the one rotary drive unit, and a delay angle, which causes a rotation start of the valve body located at a side far from the rotary drive unit to be delayed from a rotation start of the valve body located at a side close to the rotary drive unit, is set.

In this flow path switching valve, the two valve bodies in the two valve units are rotated by one rotary drive unit. During the rotation of the valve body, the friction of a portion which the valve body is in contact with changes from static friction to dynamic friction. The maximum torque generated at the time of rotation of the valve body corresponds to the case of the static friction. In this flow path switching valve, since rotation start timings of the two valve bodies are shifted due to the setting of the delay angle, the overlap of the maximum torques of the two valve bodies is suppressed. Therefore, it is possible to suppress the output required for the rotary drive unit.

According to a second aspect, in the flow path switching valve according to the first aspect, the delay angle is 1° or more.

Here, when the delay angle is less than 1°, it becomes difficult to suppress the overlap of the maximum torques of the two valve bodies. In this flow path switching valve, by appropriately setting the delay angle, it is possible to suppress the overlap of the maximum torques of the two valve bodies and to reduce the total torque serving as the load of the rotary drive unit.

According to a third aspect, in the flow path switching valve according to the first aspect, a valve shaft for transmitting a drive force to the valve body is attached to each of the two valve bodies, the two valve shafts are connected by a connection shaft, and a gap in a rotation direction for setting the delay angle is provided at least between the valve body located at a side far from the rotary drive unit and the valve shaft.

In this flow path switching valve, the valve shaft of one valve body close to the rotary drive unit and the valve shaft of the other valve body far from the rotary drive unit are connected by the connection shaft, and when one valve body is rotated by the rotary drive unit, the other valve body also rotates via the connection shaft. The rotation start timings of the two valve bodies can be shifted by providing a gap in the rotation direction for setting the delay angle at least between the valve body located at the side far from the rotary drive unit and the valve shaft.

### Advantageous Effects of Invention

According to the disclosure, it is possible to reduce a total torque when a plurality of valve bodies are rotationally driven by one rotary drive unit, and to suppress an increase in size of a flow path switching valve.

### BRIEF DESCRIPTION OF DRAWINGS

Fig. 1 is a perspective view illustrating an overall configuration of a flow path switching valve according to an embodiment of the present disclosure.
Fig. 2 is a perspective view illustrating an example in which a storage tank is attached to the flow path switching valve.
Fig. 3 is a perspective view illustrating an example in which the storage tank and a pump are attached to the flow path switching valve.
Fig. 4 is a partially broken perspective view illustrating a flow path switching valve in which two valve units overlap and two valve bodies are rotated by one rotary drive unit.
Fig. 5 is a partially broken perspective view illustrating the valve unit.
Fig. 6 is a partially broken perspective view illustrating the valve unit.
Fig. 7 is a front view illustrating a state in which the valve unit is viewed from the male joint side of a first flow path.
Fig. 8 is a partial cross-sectional view illustrating a state in which the valve unit is viewed from the opening side of a third flow path and a second flow path is cut in a radial direction.
Fig. 9 is a front view illustrating a valve body.
Fig. 10 is a bottom view illustrating the valve body.

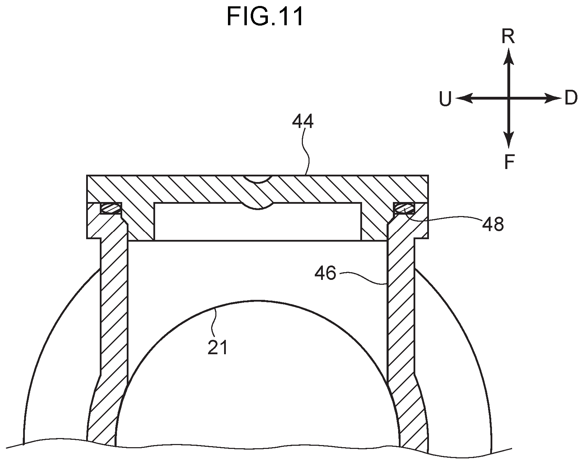

Fig. 11 is an enlarged cross-sectional view illustrating a state in which an opening provided in the middle of the first flow path is closed by a lid member.
Fig. 12 is a cross-sectional view illustrating a configuration in which, in a flow path switching valve in which two valve units overlap, a portion of one valve unit overlapping the other valve unit is a lid that closes a valve chamber of the other valve unit.
Fig. 13 is a cross-sectional view illustrating a flow path switching valve according to a modification.
Fig. 14 is a cross-sectional view illustrating a flow path switching valve according to a modification.
Fig. 15 is an enlarged plan view illustrating a gap between a valve body and a valve shaft.
Fig. 16 is an enlarged plan view illustrating a gap between a valve body and a valve shaft.
Fig. 17 is a diagram illustrating an example of a relationship between a rotation angle and a torque of a rotary drive unit.

### DESCRIPTION OF EMBODIMENTS

Hereinafter, modes for carrying out the present disclosure will be described with reference to the drawings. Components denoted by the same reference numerals in the drawings mean the same components. Overlapping descriptions and reference numerals in embodiments described below may be omitted. In addition, the drawings used in the following description are all schematic, and dimensional relationships of the respective elements, ratios of the respective elements, and the like illustrated in the drawings are not necessarily matched with actual ones. In addition, dimensional relationships of the respective elements, ratios of the respective elements, and the like are not necessarily matched among the plurality of drawings.

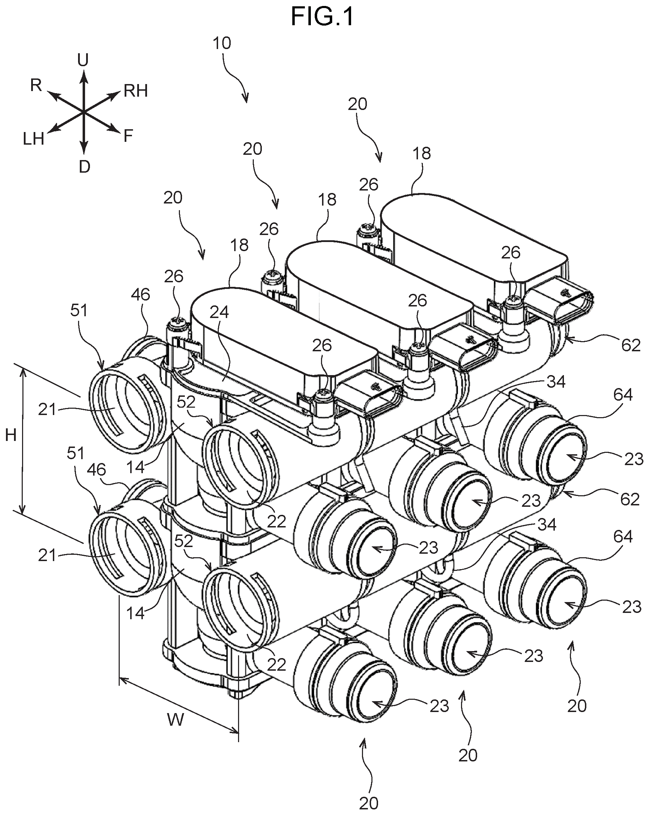

In the present specification, the description indicating the position and direction such as up and down, left and right, front and rear, and the like is based on the direction arrow display of Fig. 1, and does not refer to the position and direction in an actual use state. In Fig. 1, "U" indicates an up direction (upper side), "D" indicates a down direction (lower side), "LH" indicates a left direction (left side), "RH" indicates a right direction (right side), "F" indicates a front direction (front side), and "R" indicates a rear direction (rear side). An "up-down direction" means a direction of an arrow U and a direction of an arrow D. A "left-right direction" means a direction of an arrow LH and a direction of an arrow RH. A "front-rear direction" means a direction of an arrow F and a direction of an arrow R.

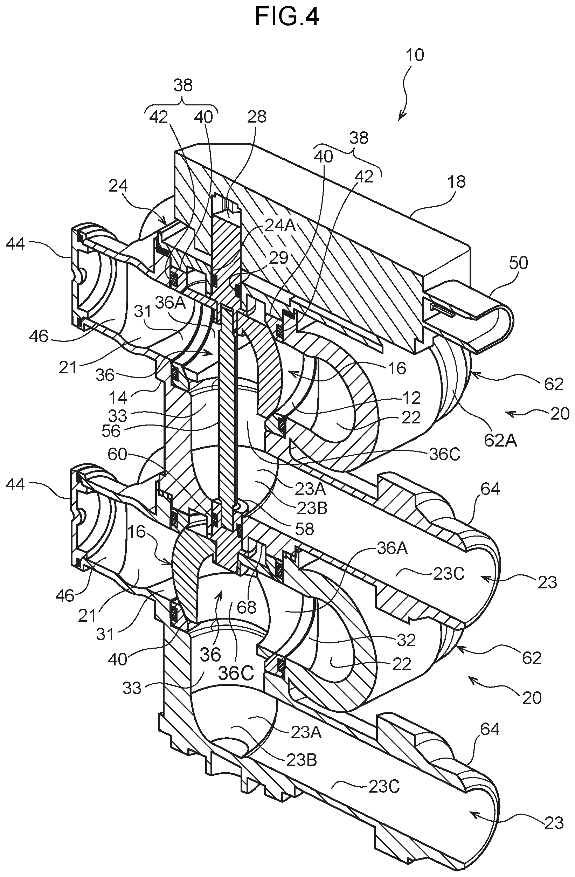

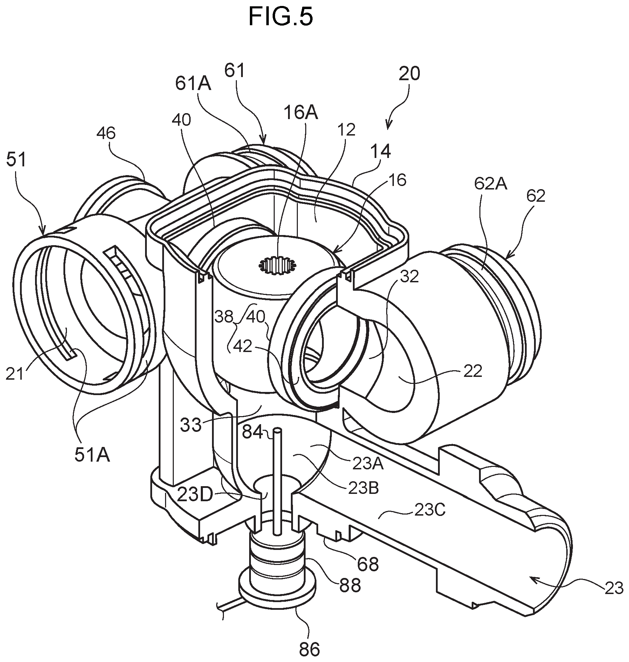

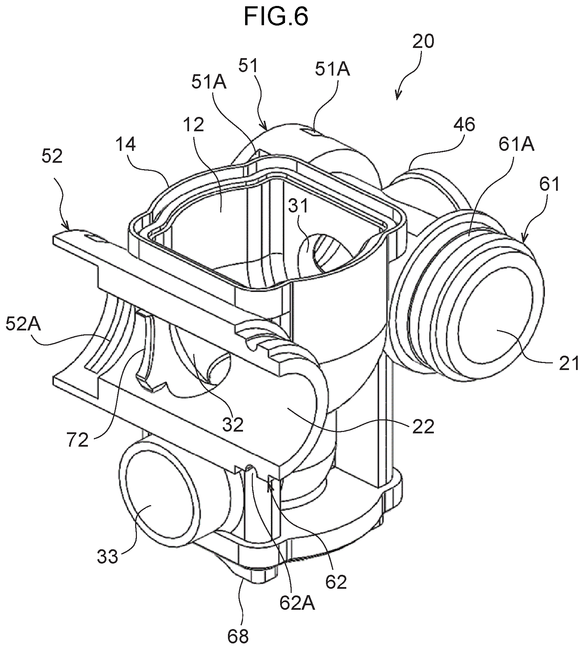

Fig. 1 is a perspective view illustrating an overall configuration of a flow path switching valve 10 according to an embodiment of the disclosure. In the flow path switching valve 10, three valve units 20 are connected in the left-right direction, and other valve units 20 overlap on the lower side of the respective valve units 20. That is, six valve units 20 are combined. Fig. 4 is a partially broken perspective view illustrating a flow path switching valve in which two valve units 20 overlap and two valve bodies are rotated by one rotary drive unit. Fig. 4 corresponds to that two upper and lower valve units 20 are extracted from Fig. 1. Figs. 5 and 6 are partially broken perspective views illustrating one valve unit 20.

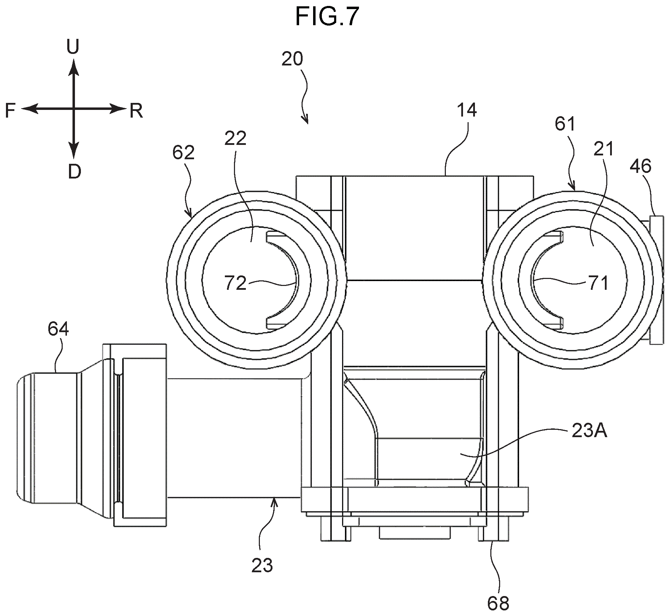

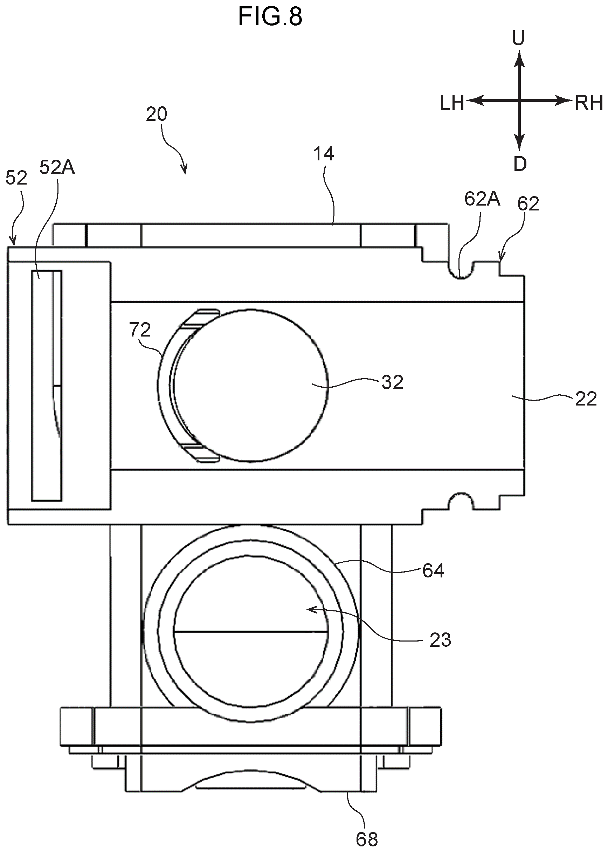

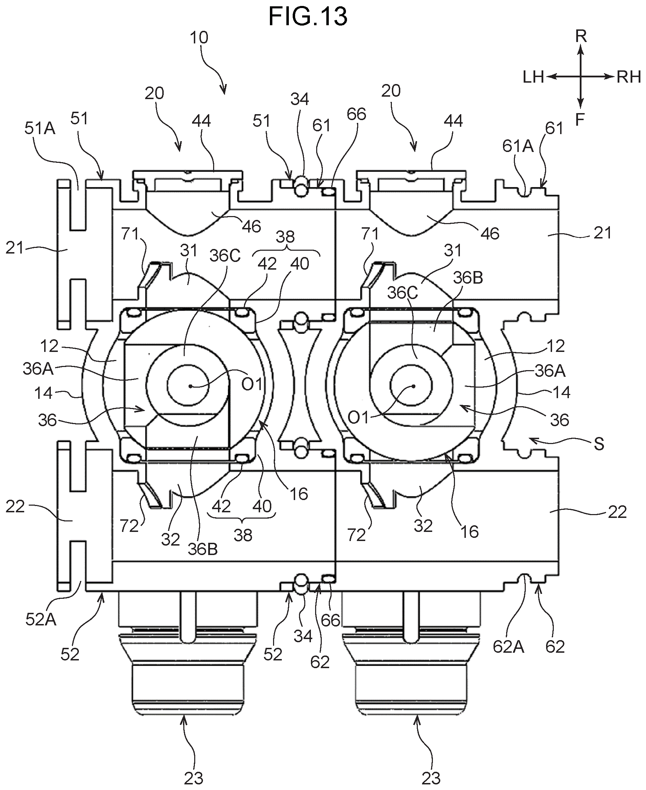

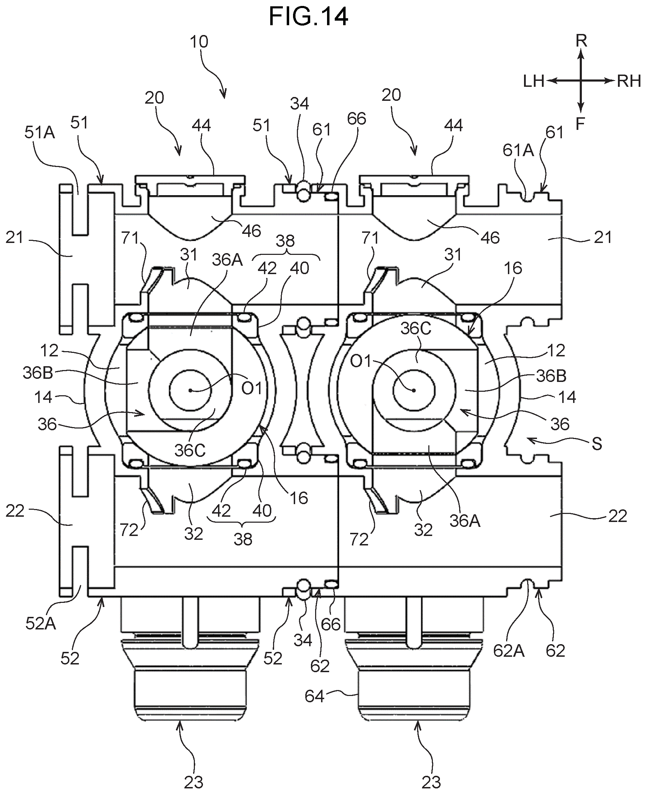

The flow path switching valve 10 is used as, for example, a rotary three-way valve (Fig. 5) or a four-way valve (Fig. 13 and Fig. 14) that switches a flow path of a fluid flowing in an engine room or the like of an automobile. As illustrated in Figs. 4 to 8, the flow path switching valve 10 includes a valve unit 20 and a rotary drive unit 18.

### [Valve Unit]

The valve unit 20 includes a valve main body 14, a valve body 16, a first flow path 21, a second flow path 22, and a third flow path 23. In the example illustrated in Fig. 5, the valve unit 20 is, for example, a three-way valve that switches between a state in which the first flow path 21 and the third flow path 23 communicate with each other, a state in which the second flow path 22 and the third flow path 23 communicate with each other, and a state in which the first flow path 21, the second flow path 22, and the third flow path 23 do not communicate with each other.

### (Valve Main Body)

In Fig. 6, the valve main body 14 is made of, for example, a synthetic resin, and a valve chamber 12 is formed therein. An up direction of the valve chamber 12 is opened, and a valve body 16 and a sealing portion 38 to be described later are inserted from the up direction. On a wall surface forming the valve chamber 12, for example, a first inlet/outlet 31 and a second inlet/outlet 32 which face each other and through which a fluid enters and exits are formed. As an example, the first inlet/outlet 31 is formed on a rear wall surface of the valve chamber 12, and the second inlet/outlet 32 is formed on a front wall surface of the valve chamber 12. That is, the first inlet/outlet 31 and the second inlet/outlet 32 face each other in the front-rear direction of the valve chamber 12. Further, a third inlet/outlet 33 is formed on a bottom surface of the valve chamber 12.

### (Valve Body)

In Figs. 4, 5, 9, and 10, the valve body 16 is a ball-shaped member made of, for example, a synthetic resin, and is rotatably disposed in the valve chamber 12. An insertion hole 16A into which a valve shaft 28 in the rotary drive unit 18 is inserted is formed in an upper portion of the valve body 16. The valve shaft 28 and the insertion hole 16A are engaged with each other around an axial direction of the valve shaft 28, and the rotation of the valve shaft 28 is transmitted to the valve body 16. The insertion hole 16A penetrates to a flow path 36 of the valve body 16, for example.

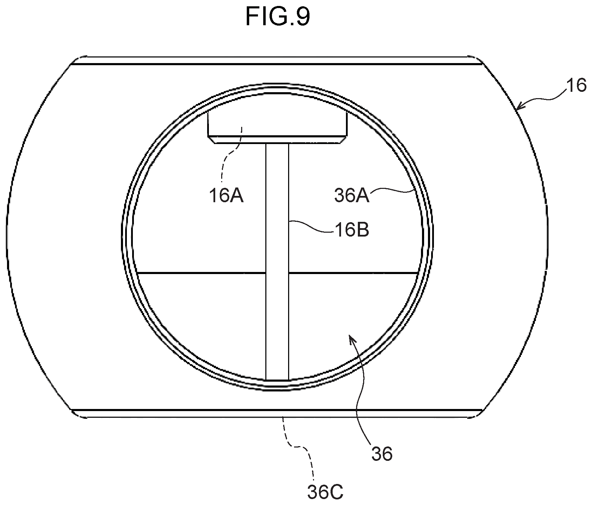

In order to enable selective communication of the first inlet/outlet 31, the second inlet/outlet 32, and the third inlet/outlet 33 of the valve main body 14, in other words, to selectively switch the communication state of the first inlet/outlet 31, the second inlet/outlet 32, and the third inlet/outlet 33, the flow path (internal flow path) 36 is provided inside the valve body 16. Specifically, as illustrated in Fig. 9, the valve body 16 is provided with a lateral hole 36A leading from the outer periphery (side portion) to the flow path 36. Further, the valve body 16 is provided with a pilot hole 36C leading from the outer periphery (lower portion) to the flow path 36. The flow path 36 communicates from the lateral hole 36A to the pilot hole 36C. According to the state of the valve body 16, the lateral hole 36A can face the first inlet/outlet 31 or the second inlet/outlet 32. In a state where the lateral hole 36A does not face any of the inlets/outlets, the valve body 16 is in close contact with a sheet member 40 described later and is closed.

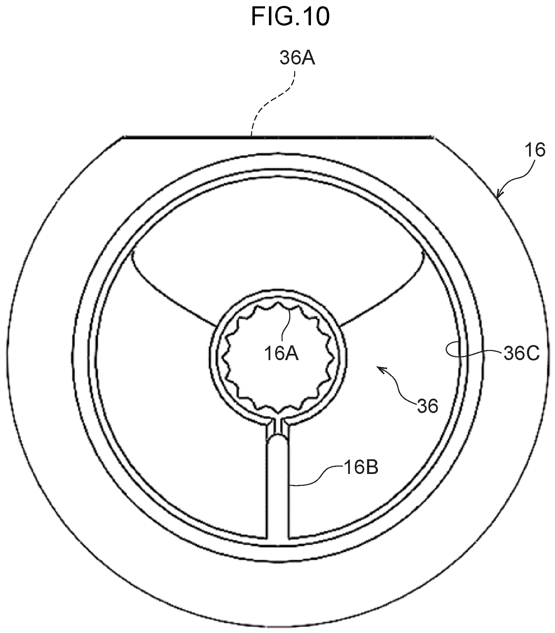

As illustrated in Figs. 9 and 10, a rib 16B extending in a direction (up-down direction) toward the third inlet/outlet 33 is formed in the flow path 36 of the valve body 16. The rib 16B is, for example, a thin plate-shaped protrusion, and is formed, for example, on an inner wall on the back side of the lateral hole 36A in the flow path 36 of the valve body 16.

In Figs. 4 and 5, a sealing portion 38 for sealing is provided between the valve body 16 and each of the first inlet/outlet 31 and the second inlet/outlet 32. The sealing portion 38 includes, for example, a sheet member 40 and an O-ring 42. The sheet member 40 is made of, for example, a synthetic resin, and is formed in an annular shape having openings corresponding to the first inlet/outlet 31 and the second inlet/outlet 32. The sheet members 40 are disposed around the first inlet/outlet 31 and the second inlet/outlet 32 on inner wall surfaces (front and rear wall surfaces of the valve chamber 12) of the valve main body 14, respectively. The valve body 16 is sandwiched between the two sheet members 40, and is disposed so as to be rotatable and slidable while being in contact with each of the sheet members 40.

The sheet member 40 and the valve main body 14 are sealed by the O-ring 42, for example, airtightly and watertightly. The O-ring 42 is attached to, for example, an O-ring groove (not illustrated) formed in the sheet member 40.

As an example, polyphenylene sulfide (PPS) can be used for the valve main body 14 and the valve body 16, fluororesin (PTFE) can be used for the sheet member 40, and synthetic rubber can be used for the O-ring 42.

### (Rotary Drive Unit)

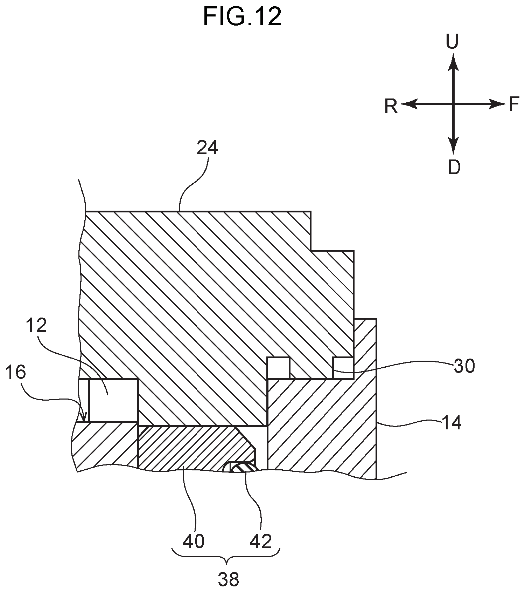

In Fig. 4, the rotary drive unit 18 is a device that is connected to the valve unit 20 and rotates the valve body 16 such that the communication state of the first inlet/outlet 31, the second inlet/outlet 32, and the third inlet/outlet 33 is selectively switched via the flow path of the valve body 16. The rotary drive unit 18 is disposed above the valve main body 14 in the upper valve unit 20. Specifically, for example, a bracket 24 is fixed onto the upper valve main body 14, and the rotary drive unit 18 is fixed onto the bracket 24 using, for example, a screw 26 (Fig. 1). An upward opening (Fig. 5) in the valve chamber 12 of the upper valve main body 14 is closed by, for example, the bracket 24 (Fig. 12). In other words, the bracket 24 has a shape that closes the opening of the valve chamber 12. The bracket 24 is welded to the inside of the opening of the valve chamber 12 in a state of being inlay-fitted. The bracket 24 is provided with a convex portion 30. The convex portion 30 faces or abuts on an edge around the valve chamber 12 in the valve main body 14. The convex portion 30 may be a melting margin. The convex portion 30 may be provided on the valve main body 14 instead of the bracket 24.

The rotary drive unit 18 is, for example, a geared motor. The rotary drive unit 18 is provided with, for example, a connector 50 to which a wire for communication with a control unit and power supply is connected. A valve shaft 28 as an output shaft is coupled to the rotary drive unit 18. The valve shaft 28 is inserted through a through hole 24A formed in the bracket 24. An O-ring 29 is attached to the valve shaft 28. The O-ring 29 ensures watertightness between the valve shaft 28 and the through hole 24A. A lower end of the valve shaft 28 is inserted into an insertion hole 16A (Fig. 5) of the valve body 16.

### (First Flow Path, Second Flow Path, and Third Flow Path)

In Figs. 4 to 6, the first flow path 21, the second flow path 22, and the third flow path 23 are, for example, pipe portions formed integrally with the valve main body 14. In other words, the first flow path 21 is a first port, the second flow path 22 is a second port, and the third flow path 23 is a third port.

The first flow path 21 has, for example, both ends opened and communicates with the first inlet/outlet 31 of the valve chamber 12. The first flow path 21 linearly extends, for example, in the left-right direction. The first inlet/outlet 31 is connected to the middle of the first flow path 21. As a result, the first flow path 21 and the first inlet/outlet 31 are formed in a substantially T shape in plan view (see Figs. 13 and 14).

The second flow path 22 is provided in parallel with the first flow path 21 with the valve main body 14 interposed therebetween, and has, for example, both ends opened and communicates with the second inlet/outlet 32. The second flow path 22 linearly extends, for example, in the left-right direction. The second inlet/outlet 32 is connected to the middle of the second flow path 22. As a result, the second flow path 22 and the second inlet/outlet 32 are formed in a substantially T shape in plan view (see Figs. 13 and 14).

As illustrated in Fig. 1, female joints 51 and 52 are provided at one ends of the first flow path 21 and the second flow path 22, respectively. As illustrated in Figs. 5 and 6, male joints 61 and 62 are provided at the other ends of the first flow path 21 and the second flow path 22, respectively. The male joints 61 and 62 are configured to be connectable to the female joints 51 and 52. Annular grooves 61A and 62A are formed on the outer peripheries of the male joints 61 and 62. In addition, for example, a pair of arc-shaped slits 51A and 52A is formed in the female joints 51 and 52. As illustrated in Figs. 13 and 14, the male joints 61 and 62 are fitted into the female joints 51 and 52, respectively, and a clip 34 is fitted into the grooves 61A and 62A through the slits 51A and 52A, thereby preventing the male joints from coming off. A water stop at a connection portion of each joint is performed by, for example, an O-ring 66. With such a joint structure, the first flow path 21 and the second flow path 22 of one valve unit 20 can be connected to the first flow path 21 and the second flow path 22 of the other valve unit 20, respectively (see Figs. 1, 13, and 14). This joint structure is an example, and any other joint structure can be used.

In Figs. 6 to 8, 13, and 14, a first protrusion portion 71 protruding from the first inlet/outlet 31 side toward the inside of the first flow path 21 is provided at a connection portion of the first flow path 21 with the first inlet/outlet 31. The first protrusion portion 71 is, for example, an arc-shaped projection formed along the opening of the first inlet/outlet 31 with respect to the first flow path 21. A range of the first protrusion portion 71 is, for example, less than half the circumference of an inner peripheral surface of the first flow path 21 on the first inlet/outlet 31 side. One surface of the first protrusion portion 71 in the left-right direction is a concave surface obtained by extending a part of the inner wall of the first flow path 21. In the illustrated example, the first protrusion portion 71 is provided on the left side of the first inlet/outlet 31. The first protrusion portion 71 may be provided on the right side of the first inlet/outlet 31, or may be provided on both left and right sides of the first protrusion portion 71.

In addition, a second protrusion portion 72 protruding from the second inlet/outlet 32 side toward the inside of the second flow path 22 is provided at a connection portion of the second flow path 22 with the second inlet/outlet 32. The second protrusion portion 72 is, for example, an arc-shaped projection formed along the opening of the second inlet/outlet 32 with respect to the second flow path 22. A range of the second protrusion portion 72 is, for example, less than half the circumference of an inner peripheral surface of the second flow path 22 on the second inlet/outlet 32 side. One surface of the second protrusion portion 72 in the left-right direction is a concave surface obtained by extending a part of the inner wall of the second flow path 22. In the illustrated example, the second protrusion portion 72 is provided on the left side of the second inlet/outlet 32. The second protrusion portion 72 may be provided on the right side of the second inlet/outlet 32, or may be provided on both left and right sides of the second protrusion portion 72.

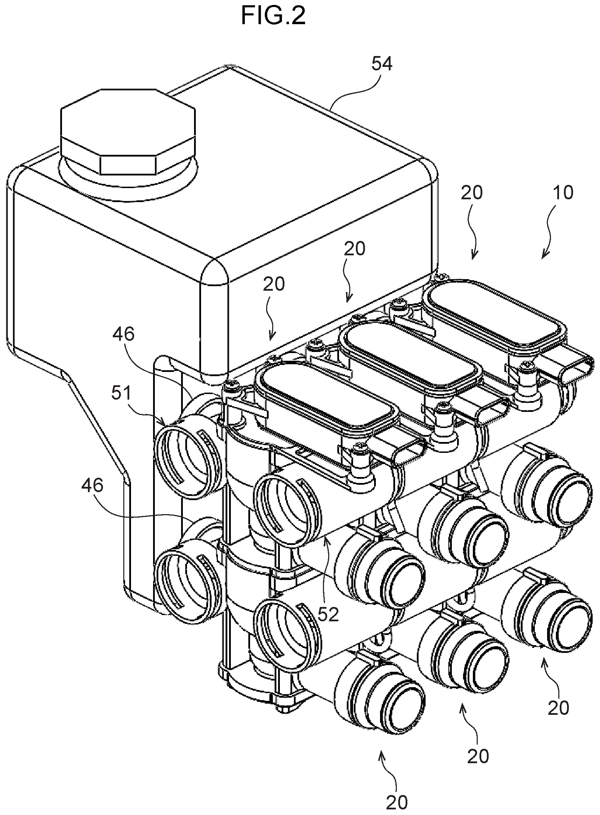

As illustrated in Figs. 1, 2, 4, and 9, a sub flow path 46 closed by a lid body 44 may be provided at a position facing the first inlet/outlet 31 in the first flow path 21, for example. A space between the lid body 44 and the end portion of the sub flow path 46 is sealed by welding or is sealed watertightly with a sealing member such as an O-ring 48. The sub flow path 46 can also be used by removing the lid body 44. For example, a storage tank 54 can be connected to the sub flow path 46. When the valve unit 20 is vertically stacked, two sub flow paths 46 exist vertically. The two sub flow paths 46 can also be connected to the storage tank 54 provided with two connection ports (Fig. 2). In this case, the storage tank 54 may have two storage chambers that correspond to the respective connection ports and are partitioned from each other. As a result, fluids having different temperatures can be stored separately even in the same fluid.

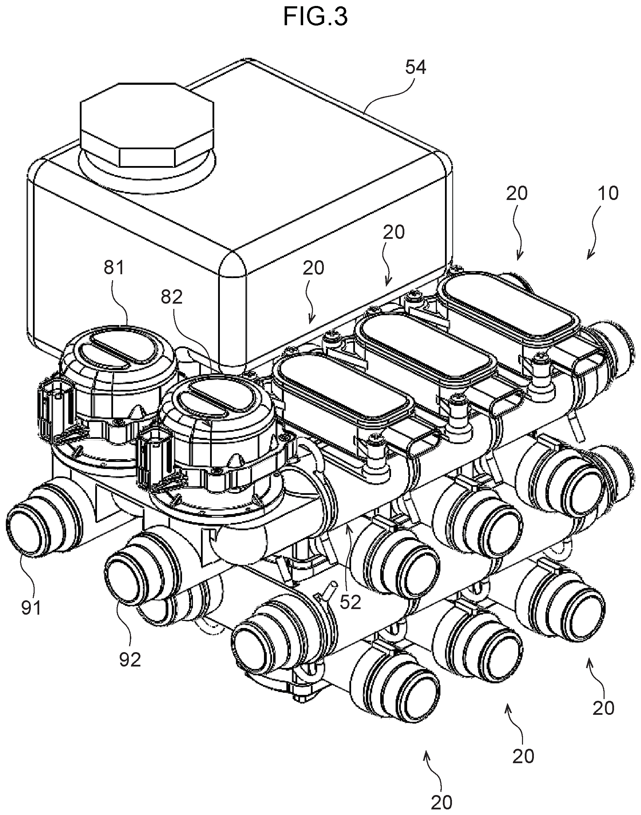

In addition, pumps 81 and 82 can be attached to the female joint 51 or the male joint 61 of the first flow path 21 at the terminal end of the flow path switching valve 10 and the female joint 52 or the female joint 62 of the second flow path 22 at the terminal end, respectively. In the example illustrated in Fig. 3, the pump 81 is attached to the female joint 51 (see Fig. 2) of the first flow path 21 in the upper valve unit 20. The pump 82 is attached to the female joint 52 of the second flow path 22 in the upper valve unit 20. The pump 81 has a joint 91 serving as a fluid inlet/outlet. In addition, the pump 82 has a joint 92 serving as a fluid inlet/outlet. The pump 81 can supply a fluid from another device to the first flow path 21 or supply a fluid in the first flow path 21 to another device via the joint 91. In addition, the pump 82 can supply a fluid from another device to the second flow path 22 or supply a fluid in the second flow path 22 to another device via the joint 92.

In Figs. 4, 5, and 7, the third flow path 23 communicates with the third inlet/outlet 33, and the side opposite to the third inlet/outlet 33 is opened. Specifically, the third flow path 23 has a bent portion 23A. The third inlet/outlet 33 is located above the bent portion 23A. The terminal end of the third flow path 23 on the opening side is located, for example, in front of the bent portion 23A, and protrudes, for example, in front of the second flow path 22. For example, a male joint 64 connectable to a pipe to another device is provided at the terminal end of the third flow path 23 on the opening side.

As illustrated in Figs. 4 and 5, for example, a spherical concave portion 23B is provided at a portion of the bent portion 23A of the third flow path 23 facing the third inlet/outlet 33, that is, below the third inlet/outlet 33. The concave portion 23B is formed in a substantially hemispherical shape. The concave portion 23B is recessed downward from a bottom 23C of the lateral flow path in front of the bent portion 23A. As a result, a part of the fluid entering the third flow path 23 from the third inlet/outlet 33 once falls into the concave portion 23B and then enters the lateral flow path of the third flow path 23.

In the example illustrated in Fig. 5, a through hole 23D is formed at the bottom of the concave portion 23B. The valve shaft 58 can pass through the through hole 23D (Fig. 4). An O-ring 60 stops water between the valve shaft 58 and the through hole 23D. In a case in which the other valve unit is not stacked on the lower side, like the valve unit 20 on the lower side in Fig. 4, for example, a structure without the through hole 23D at the bottom of the concave portion 23B is adopted. The through hole 23D may be provided or may be closed by another member (for example, a closing portion 86). For example, the closing portion 86 may include a temperature sensor 84. The temperature sensor 84 is supported by, for example, the closing portion 86, and is disposed such that a distal end thereof is located in the third flow path 23. For example, an O-ring 88 is attached to the closing portion 86. The O-ring 88 ensures watertightness between the closing portion 86 and the through hole 23D. By using the temperature sensor 84, the temperature in the third flow path 23 can be accurately measured.

### [Overlapping of Valve Units]

In Figs. 1 and 4, in the present embodiment, the other valve unit 20 can be connected to the side opposite to the rotary drive unit 18 of one valve unit 20 in an overlapping manner. A portion of the upper valve unit 20 overlapping the lower valve unit 20 is a lid 68 that closes the valve chamber 12 of the lower valve unit 20. This closing structure is substantially the same as the closing structure of the valve chamber 12 by the bracket 24 in Fig. 12, and the bottom portion of the upper valve main body 14 is welded in a state of being inlay-fitted to the inside of the opening of the valve chamber 12 in the lower valve main body 14.

As illustrated in Fig. 4, the other valve unit 20 may be connected to one valve unit 20 in an overlapping manner, and the two valve bodies 16 in the two valve units 20 may be rotated by one rotary drive unit 18. In this example, the valve shaft 28 for transmitting the drive force to the valve body 16 in the upper valve unit 20 and the valve shaft 58 for transmitting the drive force to the valve body 16 in the lower valve unit 20 are connected by a connection shaft 56. The connection shaft 56 connects the upper and lower valve shafts 28 and 58 through the inside of the upper valve body 16 and the longitudinal flow path of the third flow path 23. When the upper valve shaft 28 is rotationally driven by the rotary drive unit 18, the rotation is transmitted to the lower valve shaft 58 via the connection shaft 56, and the upper and lower valve bodies 16 rotate in synchronization.

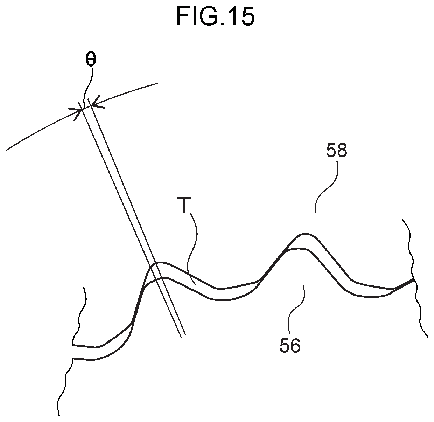

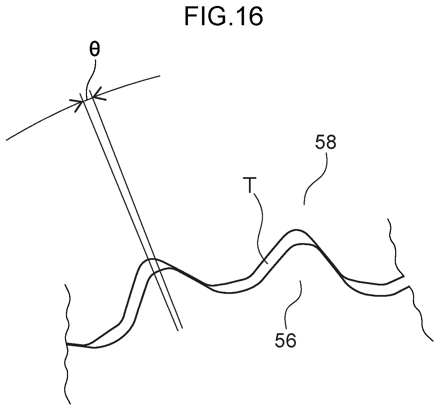

In Figs. 15 and 16, in the present embodiment, a delay angle θ where the rotation start of the valve body 16 located at the side far from the rotary drive unit 18 is delayed from the rotation start of the valve body 16 located at the side close to the rotary drive unit 18 is set. The delay angle θ is 1° or more. Here, when the delay angle θ is less than 1°, it becomes difficult to suppress the overlap of the maximum torques of the two valve bodies 16. A gap T in the rotation direction for setting the delay angle θ is provided at least between the valve shaft 58 and the connection shaft 56 in the valve body 16 located the side far from the rotary drive unit 18. The valve shaft 58 and the connection shaft 56 are, for example, serration-fitted, and the gap T corresponds to backlash of serrations.

The gap T may be provided between the valve shaft 28 and the connection shaft 56 in the valve body 16 located at the side close to the rotary drive unit 18. In this case, the delay angle θ is set by the gap T between the valve shaft 28 and the connection shaft 56. That is, even when the gap T is provided between the valve shaft 28 and the connection shaft 56 in the valve body 16 located at the side close to the rotary drive unit 18, or provided between the valve shaft 58 and the connection shaft 56 in the valve body 16 located at the side far from the rotary drive unit 18, a similar effect can be obtained.

Further, even when the gap T is provided between the valve shaft 28 and the valve body 16 in the valve body 16 located at the side close to the rotary drive unit 18, or provided between the valve shaft 58 and the valve body 16 in the valve body 16 located at the side far from the rotary drive unit 18, a similar effect can be obtained.

In the case of a structure in which the valve body 16 and the connection shaft 56 located at the side far from the rotary drive unit 18 and the side close to the rotary drive unit 18 are directly combined, the delay angle θ is provided by each gap T between the valve body 16 and the connection shaft 56.

The gap T may be provided between the valve shaft 28 and the connection shaft 56 in the valve body 16 located at the side close to the rotary drive unit 18 and between the valve shaft 28 and the valve body 16. Further, the gap T may be provided between the valve shaft 58 and the connection shaft 56 in the valve body 16 located at the side far from the rotary drive unit 18 and between the valve shaft 58 and the valve body 16. In this case, the delay angle θ is provided by a difference between the total of the gaps T in the valve body 16 located at the side close to the rotary drive unit 18 and the total of the gaps T in the valve body 16 located at the side far from the rotary drive unit 18.

Means for setting the delay angle θ is not limited to the gap T, and for example, elasticity of the connection shaft 56 in a twisting direction may be used. By twisting the connection shaft 56, the rotation start of the valve body 16 located at the side far from the rotary drive unit 18 may be delayed from the rotation start of the valve body 16 located at the side close to the rotary drive unit 18.

In Figs. 13 and 14, a gap S may be provided between the first flow path 21 and the second flow path 22 adjacent to each other. Further, the gap S may be provided between the two first flow paths 21 and between the two second flow paths 22 of the overlapping valve units 20.

In Fig. 1, a center-to-center distance W between the end portion of the first flow path 21 and the end portion of the second flow path 22 in one valve unit 20 may be equal to a center-to-center distance H between the end portions of the first flow paths 21 in an overlapping direction in a state where the other valve unit 20 is overlapped and connected to one valve unit 20. That is, W = H may be satisfied.

### (Functions)

The present embodiment is configured as described above, and the functions thereof will be described below. In Fig. 4, in the flow path switching valve 10 according to the present embodiment, by rotating the valve body 16 by the rotary drive unit 18, the communication state of the first inlet/outlet 31, the second inlet/outlet 32, and the third inlet/outlet 33 of the valve chamber 12 can be selectively switched via the flow path 36 of the valve body 16. Since the first inlet/outlet 31 and the second inlet/outlet 32 face each other with the valve chamber 12 interposed therebetween, and one lateral hole 36A is formed in the valve body 16, switching of the flow path can be performed by rotating the valve body 16 by 180°.

Since the first flow path 21 and the second flow path 22 of one valve unit 20 can be connected to the first flow path 21 and the second flow path 22 of the other valve unit 20, respectively, it is possible to easily realize flow path switching valves of various specifications by combining the valve units 20. Specifically, the female joints 51 and 52 are provided at one ends of the first flow path 21 and the second flow path 22, respectively, and the male joints 61 and 62 are provided at the other ends of the first flow path 21 and the second flow path 22, respectively. The male joints 61 and 62 can be connected to the female joints 51 and 52, respectively. Therefore, for example, each of the first flow paths 21 and the second flow paths 22 of one valve unit 20 and the other valve unit 20 can be easily connected to each other.

In Fig. 1, for example, when W = H is satisfied, in a case in which the other two overlapping valve units 20 are connected in the direction of the first flow path 21 and the second flow path 22 of the two overlapping valve units 20, not only each of the first flow paths 21 and the second flow paths 22 is connected, but also the first flow path 21 and the second flow path 22 can be connected. That is, the two valve units 20 can be connected to each other by being rotated by 90°. Therefore, a degree of freedom of the combination of the valve units 20 can be further increased.

The fluid flowing from the valve chamber 12 into the third flow path 23 through the third inlet/outlet 33 passes through the bent portion 23A. In a case in which the spherical concave portion 23B is provided in a portion facing the third inlet/outlet 33 in the bent portion 23A of the third flow path 23, the resistance of the fluid is reduced as compared with a configuration in which the concave portion 23B is not provided in the portion and the portion is simply bent. Therefore, the pressure loss in the third flow path 23 can be suppressed.

Furthermore, as illustrated in Figs. 9 and 10, when the rib 16B extending in the direction toward the third inlet/outlet 33 is formed in the flow path 36 of the valve body 16, the fluid flowing in the valve body 16 can be rectified. When the valve body 16 is assembled into the valve chamber 12, the direction of the valve body 16 can be easily adjusted by applying a force to the rib 16B.

As illustrated in Figs. 6 to 8, 13, and 14, when the first protrusion portion 71 is provided at the connection portion of the first flow path 21 with the first inlet/outlet 31 of the valve chamber 12, the flow of the fluid in the first flow path 21 is disturbed by the first protrusion portion 71. As a result, the fluid flowing through the first flow path 21 can be guided to the first inlet/outlet 31. When the second protrusion portion 72 is provided at the connection portion of the second flow path 22 with the second inlet/outlet 32 of the valve chamber 12, the fluid flowing through the second flow path 22 can be guided to the second inlet/outlet 32 by disturbing the flow of the fluid in the second flow path 22 by the second protrusion portion 72. In this way, the inflow of the fluid from the first flow path 21 and the second flow path 22 to the valve chamber 12 can be promoted.

Furthermore, as illustrated in Figs. 1 and 4, the other valve unit 20 can be connected to be overlapped on the side opposite to the rotary drive unit 18 of one valve unit 20, so that the degree of freedom of the combination of the valve units 20 can be increased.

In a case in which a portion of one valve unit 20 overlapping the other valve unit 20 is the lid 68 that closes the valve chamber 12 of the other valve unit 20, when one valve unit 20 and the other valve unit 20 overlap, another component for closing the valve chamber 12 of the other valve unit 20 is unnecessary. Therefore, it is possible to suppress an increase in the number of parts and to enhance workability when the valve units 20 are connected in an overlapping manner.

In a case in which the two valve bodies 16 in the two overlapping valve units 20 are rotated by one rotary drive unit 18, the number of parts can be reduced and the cost can be reduced as compared with a case in which the rotary drive units 18 are provided in the two valve units 20.

As described above, according to the present embodiment, flow path switching valves of various specifications can be easily realized.

In a case in which the two valve bodies 16 in the two valve units 20 are rotated by one rotary drive unit 18, the friction of a portion (sealing portion 38) which the valve body 16 is in contact with changes from the static friction to the dynamic friction when the valve body 16 rotates. The maximum torque generated at the time of rotation of the valve body 16 corresponds to the case of the static friction. In the present embodiment, since the rotation start timings of the two valve bodies 16 are shifted by setting the appropriate delay angle θ, the overlap of the maximum torques of the two valve bodies 16 is suppressed. Therefore, it is possible to reduce the total torque serving as the load of the rotary drive unit 18.

In the present embodiment, the valve shaft 28 of one valve body 16 close to the rotary drive unit 18 and the valve shaft 58 of the other valve body 16 far from the rotary drive unit 18 are connected by the connection shaft, and when the rotary drive unit 18 rotates one valve body 16, the other valve body 16 also rotates via the connection shaft 56. By providing the gap T (Figs. 15 and 16) in the rotation direction for setting the delay angle θ at least between the valve body 16 and the valve shaft 58 located at the side far from the rotary drive unit 18, it is possible to shift the rotation start timings of the two valve bodies 16.

It is possible to reduce the total torque when the plurality of valve bodies 16 are rotationally driven by one rotary drive unit 18 and to suppress the output required for the rotary drive unit 18. Therefore, it is possible to suppress an increase in size of the flow path switching valve 10.

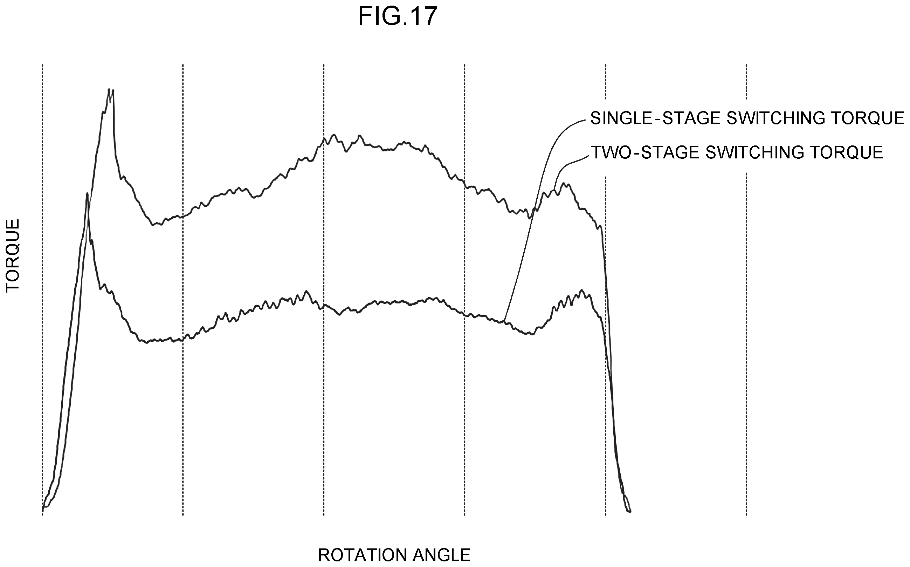

Fig. 17 illustrates an example of a relationship between the rotation angle and the torque of the rotary drive unit 18. The "single-stage switching torque" in the drawing indicates a torque fluctuation when the valve body 16 of one valve unit 20 is rotated by the rotary drive unit 18. The "two-stage switching torque" indicates a torque fluctuation when the valve bodies 16 of the two valve units 20 are rotated by the rotary drive unit 18. It can be seen that the "two-stage switching torque" is not twice the "one-stage switching torque" but is suppressed to be smaller than twice the "one-stage switching torque" by setting the delay angle θ. The same applies to a peak value of the torque. In addition, since the peak of the "two-stage switching torque" is the sum of the dynamic friction of the valve body 16 on the side close to the rotary drive unit 18 and the static friction of the valve body 16 on the side far from the rotary drive unit 18, it can be seen that the position of the peak is shifted after the peak of the "one-stage switching torque".

### (Modifications)

The valve unit 20 is not limited to the three-way valve, and may be, for example, a four-way valve as illustrated in Figs. 13 and 14. In this case, in the valve body 16, a lateral hole 36B joining from the outer periphery (side portion) to the center of the lateral hole 36A is formed, for example, in a direction orthogonal to a rotation axis O1 of the valve body 16 and orthogonal to the lateral hole 36A. By rotating the valve body 16 by 90°, it is possible to switch between a state in which the first inlet/outlet 31 communicates with the third inlet/outlet 33 and a state in which the second inlet/outlet 32 communicates with the third inlet/outlet 33.

### [Other Embodiments]

Although an example of the embodiment of the disclosure has been described above, the embodiment of the disclosure is not limited to the above, and it is a matter of course that various modifications can be made without departing from the gist of the disclosure in addition to the above.

The female joints 51 and 52 are provided at one ends of the first flow path 21 and the second flow path 22, respectively, and the male joints 61 and 62 having a structure connectable to the female joints 51 and 52 are provided at the other ends of the first flow path 21 and the second flow path 22, respectively. However, such a joint structure is not necessarily provided.

Although the concave portion 23B is provided in the bent portion 23A of the third flow path 23, the concave portion 23B is not necessarily provided. Although the rib 16B is formed in the flow path 36 of the valve body 16, a configuration without the rib 16B may be adopted.

Although the first protrusion portion 71 is provided at the connection portion with the first inlet/outlet 31 in the first flow path 21 and the second protrusion portion 72 is provided at the connection portion with the second inlet/outlet 32 in the second flow path 22, either the first protrusion portion 71 or the second protrusion portion 72 may be provided, or the first protrusion portion 71 and the second protrusion portion 72 is not necessarily provided.

Although the other valve unit 20 can be connected to the side opposite to the rotary drive unit 18 of one valve unit 20 in an overlapping manner, another member may be interposed between the two valve units 20. In addition, such connection is not necessarily possible.

The center-to-center distance W between the end portion of the first flow path 21 and the end portion of the second flow path 22 in one valve unit 20 is equal to the center-to-center distance H (W = H) between the end portions of the first flow paths 21 in the overlapping direction in a state where one valve unit 20 and the other valve unit 20 are overlapped and connected, but the center-to-center distance W may be different from the center-to-center distance H. In the flow path switching valve, the valve units 20 are stacked in two stages, but may be stacked in three or more stages.

The disclosure of Japanese Patent Application No. 2023-208015 filed on December 8, 2023 is incorporated herein by reference in its entirety.

All documents, patent applications, and technical standards described in the present specification are incorporated herein by reference to the same extent as if each individual document, patent application, and technical standard were specifically and individually indicated to be incorporated by reference.

## Claims

1. A flow path switching valve, comprising:
a valve unit, the valve unit including a valve main body in which a valve chamber is formed, a first inlet/outlet and a second inlet/outlet through which a fluid enters and exits being formed on a wall surface forming the valve chamber, and a third inlet/outlet being formed on a bottom surface of the valve chamber; a valve body that is rotatably disposed in the valve chamber and that is provided with a flow path; a first flow path that communicates with the first inlet/outlet; a second flow path that is arranged in parallel with the first flow path with the valve main body interposed therebetween, and that communicates with the second inlet/outlet; and a third flow path that communicates with the third inlet/outlet and that has an opening at a side opposite to the third inlet/outlet; and
a rotary drive unit that is connected to the valve unit and that rotates the valve body such that communication states of the first inlet/outlet, the second inlet/outlet, and the third inlet/outlet are selectively switched via the flow path of the valve body, wherein:
another valve unit is connected to the one valve unit in an overlapping manner, and
the two valve bodies in the two valve units are configured to be rotated by the one rotary drive unit, and a delay angle, which causes a rotation start of the valve body located at a side far from the rotary drive unit to be delayed from a rotation start of the valve body located at a side close to the rotary drive unit, is set.

2. The flow path switching valve according to claim 1, wherein the delay angle is 1° or more.

3. The flow path switching valve according to claim 1, wherein:
a valve shaft for transmitting a drive force to the valve body is attached to each of the two valve bodies,
the two valve shafts are connected by a connection shaft, and
a gap in a rotation direction for setting the delay angle is provided at least between the valve body located at a side far from the rotary drive unit and the valve shaft.
